(19) Europäisches Patentamt
European Patent Office
Office européen des brevets

(11) Publication number: 0 256 144 B1

(12) # EUROPEAN PATENT SPECIFICATION

(45) Date of publication of the patent specification: 13.06.90

(51) Int. Cl.[5]: C04B 24/26

(21) Application number: 86109390.4

(22) Date of filing: 09.07.86

(54) **Alkaline curing emulsions for use in cement admixtures.**

(43) Date of publication of application: 24.02.88 Bulletin 88/8

(45) Publication of the grant of the patent: 13.06.90 Bulletin 90/24

(84) Designated Contracting States: DE FR GB IT

(56) References cited: US-A- 3 694 393

(73) Proprietor: National Starch and Chemical Corporation, 10 Finderne Avenue, P.O. Box 6500, Bridgewater, New Jersey 08807(US)

(72) Inventor: Tokumoto, Minoru, 1-3365-31, Shiroyamadai Sango-cho, Ikoma-gun Nara(JP)
Inventor: Takagi, Motoyuki, 2-24-14, Higashinakajima, Higashiyodogawa-ku Osaka(JP)
Inventor: Shitaoka, Shizou, 1-6-8-104, Tomobuchi-cho, Miyakojima-ku Osaka(JP)
Inventor: Gold, Samuel, 35 Parlin Lane, Watchung New Jersey 07060(US)
Inventor: Iovine, Carmine P., 263 White Oak Ridge Road, Bridgewater New Jersey 08807(US)

(74) Representative: Hagemann, Heinrich, Dr. Dipl.-Chem. et al, Patentanwälte HAGEMANN & KEHL Ismaninger Strasse 108 Postfach 860329, D-8000 München 86(DE)

EP 0 256 144 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

BACKGROUND OF THE INVENTION

This invention related to cement mixtures containing an aqueous emulsion of an alkaline-curable polymer. The resulting cement mortars have excellent adhesion, flexibility, and waterproofing properties.

Aqueous emulsions of synthetic polymers have been added to cement admixtures which are used for the surface finishing of buildings or structures. The resulting cement mortars have shown improvements in adhesion, crack-resistance, impact-resistance, abrasion-resistance, flexibility, and waterproofing properties. The aqueous emulsions used have included synthetic rubber latex, acrylate emulsion, ehtylen-vinyl acetate emulsion, and ethylene-vinyl chloride emulsion. Of these, the synthetic rubber latices are excellent in water- and alkali-resistance, but unsatisfactory in ozone-resistance, heat-resistance, and weather-resistance. Hence, they do not provide satisfactory cements. Ethylenevinyl acetate emulsions provide good adhesion but are poor in water-resistance, alkali-resistance, and weather-resistance. Ethylene-vinyl chloride emulsions have good adhesion and alkali-resistance, but are poor in heat-resistance and weather-resistance. Acrylate emulsions have a good balance of properties and have been widely used to provide the best cement admixtures.

Although acrylate emulsions have been used widely, attempts have been made to improve their performance, specifically to improve the adhesion of the cement mortar. One such attempt has been the introduction of carboxyl and epoxide groups into an acrylate polymer by polymerization with ethylenically unsaturated monomers containing such groups. Another attempt has been the introduction of a cationic charge into an acrylate polymer by polymerization with an ethylenically unsaturated cationic monomer such as alkylaminoethylmethacrylate. However, in some cases, the adhesion of the resulting cement mortar to certain adherents is still unsatisfactory, e.g., to adherents such as glazed ceramic tiles, plastic floor surfaces (epoxy resin, urethane resin, polyvinyl chloride, and the like), asphalt, concrete, steel, and plywood, as well as old and weathered concrete and mortar.

In order to increase the flexibility of the cement mortar, acrylate polymers having a low Tg are added in large amounts. The use of the low Tg polymers results in poor adhesion due to low cohesive strength. There is also a limitation on the amount of polymer emulsion which can be added to the cement. Hence, good adhesion and good flexibility have not been obtained simultaneously using the same polymer emulsion.

SUMMARY OF THE INVENTION

The present invention provides a cement mixture which results in a cement mortar which has excellent adhesion to various adherents and which maintains excellent flexibility over a wide range of temperatures including very low temperatures. The cement mixture comprises a cement and an effective amount of an aqueous emulsion of an acrylate polymer having a Tg below 10°C to –40°C, which comprises a polymer of (a) about 25 to 99.5% of a hydrolytically-stable acrylate or methacrylate monomer, (b) about 0.5–15% of an alkaline-curable cationic quaternary ammonium salt monomer, (c) 0–70% of a hydrolytically-stable monomer other than (a) or (b), and (d) 0–30% of a hydrolytically-unstable monomer other than (a) or (b) with the percentages being by weight and totaling 100%; the acrylate units in the polymer being represented by the formula

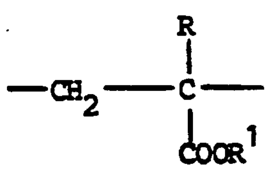

and with the alkaline-curable cationic quaternary ammonium salt units in the polymer being represented by the formula

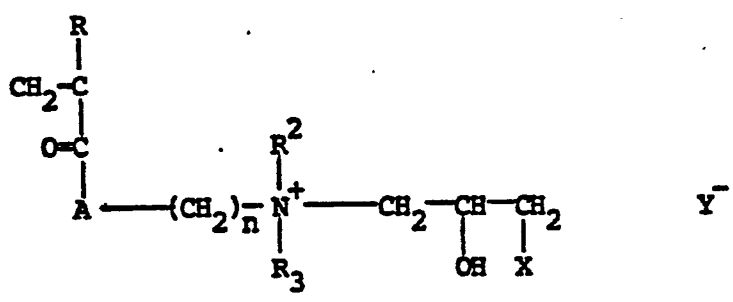 ,

where R is hydrogen or a methyl group; $R^1$ is a $C_1$–$C_{12}$ alkyl group or a $C_6$–$C_{12}$ cycloalkyl group with the proviso that $R^1$ is not $C_1$ or $C_2$ when R is H; $R^2$ and $R^3$ may be the same or different and are a methyl or ethyl group; A is –0– or –NH–; X is chlorine, bromine, or iodine; Y is an organic or inorganic monovalent anion; and n is 2 or 3. The practitioner will recognize that the halohydrin group

(i.e., 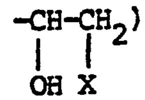

will be in epoxide form

(i.e., 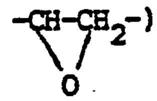

under alkaline conditions.

Aqueous emulsions of the above alkaline-curable cationic acrylate resins are effectively absorbed by the anionically charged cement particles. The cement and polymer particles are evenly distributed. The functional group

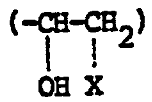

on the particle surface of the polymer are crosslinked in the presence of the alkaline cement. When the cement is used as a mortar, it contains sand. When the cement is used as a paint, it may or may not contain a fine sand. The resulting cement mortar shows high adhesive strength even with difficult bonding surfaces. The resulting cement paint shows improved flexibility and adhesion. Thus, it is possible to improve the low temperature flexibility without reducing the adhesive strength.

Typical alkyl or cycloalkyl acrylates or methacrylates include methyl methyacrylate, ethyl methacrylate, propyl acrylate or methacrylate, butyl acrylate or methacrylate, amyl acrylate or methacrylate hexyl acrylate or methacrylate, 2-ethylhexyl acrylate or methacrylate, n-octyl acrylate or methacrylate, decyl acrylate or methacrylate, lauryl acrylate or methacrylate, and cyclohexyl acrylate or methacrylate. These can be used alone or in combination. If necessary, other monomers which can be copolymerized with the above-described monomers can be included. These include hydrolytically-stable monomers such as styrene and its derivatives, acrylonitrile or methacrylonitrile, acrylic acid or methacrylic acid, vinyl pyridine, vinyl pyrrolidinone, N,N'-dialkyl acrylamide or methacrylamide, dimethylaminopropyl acrylamide or methacrylamide in amounts up to about 70% by weight. Hydrolytically-unstable monomers such as methyl acrylate, ethyl acrylate, vinyl acetate, vinyl chloride, and vinyl ethers may also be used in amounts which do not affect the hydrolytic stability of the polymer, e.g., up to 30% by weight. The term "hydrolytically-stable monomer", as used herein, means a monomer which does not hydrolyze at a pH above 11.

The preferred polymers contain about 40–60%, most preferably 50% methylmethacrylate or styrene, 40–60%, most preferably 50%, butyl acrylate, 1–10% of the cationic monomer, and optionally 2-ethylhexyl acrylate, with the percentages totaling 100% and being selected to give a polymer within the preferred Tg range of 0 to –10°C.

The alkaline-curable cationic quaternary ammonium monomers useful herein are the adducts of an epihalohydrin and a dialkylaminoalkyl acrylamide or methacrylamide (where A is –NH–) or acrylate or methacrylate (where A is –O–). These cationic halohydrin-containing monomers are described in US-A 3 095 390 (which covers the methacrylamides) and US-A 3 694 393 (which covers the methacrylate).

Typical adducts include adducts dimethylaminoethyl acrylate or methacrylate, diethylaminoethyl acrylate or methacrylate, dimethylaminopropyl acrylate or methacrylate, diethylaminoethyl acrylamide or methacrylamide, diethylaminopropyl acrylamideor methacrylamide, and the like. The monomers are used in the salt form. Various salts are suitable. Typical inorganic anions include chloride, bromide, sulfate and nitrate. Typical organic anions include acetate, benzosulfonate and lauryl sulfonate. The preferred monomers are the chlorides or nitrates of dimethylaminoethyl methacrylate, dimethylaminopropyl methacrylate, and dimethylaminopropyl methacrylamide. They are easy to manufacture or purchase and give acrylate polymers having good performance.

The amount of quaternary ammonium salt monomer used is preferably 0.5–15%, preferably 1–10%, by weight of the total polymer. Below 0.5% the improvement in adhesion and flexibility is insufficient and above 15%, the crosslinking density is too great, causing the polymer, and consequently the cement mortar, to become brittle.

The aqueous emulsions herein can be prepared by known polymerization methods, that is, by charging

the above monomers with an initiator into a reactor with an agitator and a jacket for controlling the temperature and polymerizing at 50–80°C and atmospheric pressure for 3–8 h. Conventional initiators and other polymerization additives such as surfactants and/or protective colloids may be used.

As the initiator, a peroxide or a combination of a peroxide and reducing agent is used. The preferred peroxides include: potassium sulfate, ammonium persulfate, sodium persulfate, or hydrogen peroxide. The preferred reducing agents include sodium bisulfite, sodium hydrosulfite and ferrous salts (e.g., ferrous sulfate/tartaric acid). The thiosulfate initiators are employed in known catalytic amounts, preferably about 0.02–5% by weight based on the weight of the total monomers.

As surfactants, all conventional types can be used; however, it is preferable to use a nonionic or cationic surfactant in order to provide the desired performance of the acrylate polymer. The preferred nonionic surfactants include polyoxyethylene alkyl ether, polyoxyethylene alkylphenol ether, and oxyethylene oxypropylene block copolymers. The preferred cationic surfactants include lauryl trimethyl ammonium chloride and alkylbenzyl dimethyl ammonium chloride. Although anionic surfactants are not as effective as the nonionic or cationic surfactants, they can be used. Suitable anionic surfactants are an alkali salt of a higher alcohol sulfate, alkali salt of alkylbenzene sulfonate, alkali salt of alkylnaphthalene sulfonate, alkali salt of polyoxyethylene alkyl sulfate, or alkali salt of polyoxyethylene alkylphenyl sulfate.

As protective colloids, most of the known water soluble polymers can be used. These include fully or partially hydrolyzed polyvinyl alcohol, an alkali salt of a fully or partially hydrolyzed sulfonated polyvinyl alcohol, cellulose derivatives such as methyl cellulose and hydroxyethyl cellulose, polyethylene glycol, and polypropylene glycol. The amount of protective colloid is preferably 0.2–10%, more preferably 2–5%, by weight based on the total weight of the monomers.

Buffering agents, preferably phoshoric acid, sodium bicarbonate, potassium bicarbonate, sodium pyrophosphate, potassium pyrophosphate, sodium phosphate, and sodium acetate may be used. The amount used is preferably 0–5% by weight based on the total weight of the monomer(s).

The resulting polymers are dispersed in water thus forming an emulsion. The preferred particle size is 0.1–1 micron. the polymer content (i.e., solids) in the emulsion is preferably 20–70% by weight. The Tg of the acrylate polymers is controlled by the carbon chain length of the alkyl group (i.e., $R^1$) in the acrylate or methacrylate monomer. The polymer should have a theoretical Tg below 10°C, preferably below 0°C, and most preferably –10°C or below. The acrylate polymers become brittle when their Tg is over 10°C and, consequently, the flexibility of the cement mortar is not improved. Thus, it is necessary to keep the Tg below 10°C.

However, acrylate or methacrylate polymers having a Tg above 10°C can be used if sufficient plasticizer is added so that the apparent Tg of the plasticized polymer composition is lowered to below 10°C. For the purposes herein, these plasticized aqueous polymer emulsions are considered the equivalent of the non-plasticized polymer emulsions containing polymers have the required Tg. The plasticizer can be added at the same time the raw materials are charged to the reactor or can be added after the polymerization reaction has been completed. The preferred plasticizers include dibutyl phthalate, dioctyl phthalate, trimethyl penta diol mono-iso-butyrate, trimethyl penta diol di-iso-butyrate, and butyl carbitol. The amount of plasticizer used is below 20% by weight, based on the total weight of the polymer. It is preferable to minimize the amount used.

With respect to the lower limit for the Tg of the polymers, if it is below –40°C, the main chain of the plolymer becomes too soft and sufficient mechanical strength is not obtained even after the curing has taken place. Hence, the preferred lower limit for the Tg is –40°, more preferably –30°C.

The cement mixture herein is manufactured by mixing the aqueous polymer emulsion, cement, and, if necessary, other additives. All known cements are suitable for use herein, i.e., Portland cement, rapid hardening cement, ultra rapid hardening cement, aluminum cement, jet cement, Portland blast furnace cement, Pozzolan cement, sulfate-resistant cement and white Portland cement. Fillers are used when necessary, and the preferred fillers include silica sand, crushed sand, blast furnace slag sand, sea sand, Perlite, calcium carbonate, asbestos, alkali-resistant glass fiber, steel fiber, carbon fiber, fly ash, titanium dioxide, and iron ore sand. The addition of a defoamer makes it possible to obtain high density cement mortars. The amount of defoamer used is preferably 0–5%, based on the aqueous emulsion. If a pigment is desired, iron oxide red and carbon black are preferred.

Typical cement mixing methods are suitable for mixing the above aqueous polymer emulsion and the cement. For example, the cement, emulsion, and necessary fillers (depending upon the end use) are mixed in a conventional mixer such as an electric mixer, a paint disperser, or a mortar mixer. In this case, the emulsion can be diluted previously with part or all of the water to be added as mixing water for the cement. The amount of polymer emulsion used should be sufficient to provide 1–200% of polymer solids based on the cement solids weight. The appropriate mixing ratio is selected within this range according to the use for the cement mortar composition. For example, when the adhesion is to be increased, 1–40%, preferably 5–25%, is appropriate. When flexibility is to be provided, 25–200%, preferably 40–100%, is appropriate. Even though the mixing of the polymer emulsion and cement is carried out at room temperature, the curing reaction does not take place immediately, but follows the rate of the cement hydration reaction.

In the typical cement mortar the ratio of cement to sand to polymer solids is 1 to 0.5–4.0 to 0.05–0.25, whereas in the typical cement paint the ratio is 1 to 0–1 to 0.1–1. The resulting cement mixtures are suitable

for use on various types of adherent surfaces, such as concrete structural walls, concrete floors, waterproofing cement mortars, elastic cement coatings, weathered ceramic tile surfaces, steel floors, or steel pipe surfaces. They are also suitable for joint sealing of concrete, autoclaved light weight concrete, and ceramic tile. They may be applied in the same manner as the usual cement finishing methods, e.g., by the use of trowel, brush, or spray gun. The amount applied will depend upon the use, typically a thick coating (1–50 mm) is applied when the cement is used as a mortar and thin coating (1–2 mm) is applied when the cement is used as a paint. The curing of the cement admixture is carried out in air or in moist air.

When the cement mixture herein is coated on the adherent, the water in the cement admixture is decreased by hydration of the cement, by evaporation, and even by being absorbed into the adherent when the adherent has water absorbing capability. Upon loss of water the polymer particles, cement particles, and optional fillers become more intimately in contact with each other. The acrylate polymers herein have many cationic groups on the surface of the acrylate polymer particles. The particles are more strongly cationically charged than those polymers containing added cationic surfactants or protective colloids, as well as those cationic polymers containing no alkaline-curable groups (e.g., alkylaminoethylmethacrylate). The particles, therefore, are absorbed and fused more effectively with the anionic cement particles and fillers.

The cement admixture herein provides flexibility and good adhesion which is not reduced by changes in temperature. Because the polymer has a Tg of below 10°C it is rather soft, and the hardened cement shows excellent flexibility, not only at ordinary temperatures, but also at low temperatures.

In the examples which follow, the parts are by weight, the Brabender viscosity is determined at 30°C, and the reported Tg values are theoretical (i.e., calculated) values rather than actual Tg values.

EXAMPLE I

This example describes the preparation of an aqueous emulsion of an acrylate polymer (MMA/2-EHA) containing an alkaline-curable cationic quaternary ammonium salt monomer. It compares the performance of a cement mortar containing this polymer emulsion with cement mortars containing aqueous emulsions of comparative acrylate resins.

Part A – Alkaline-Curbably Acrylate Emulsion

The following were charged to a 2 liter reactor equipped with an anchor-shaped agitator:

| Initial Charge | Parts |
|---|---|
| Polyoxyethylene nonylphenol (20 moles EO*) | 5 |
| Sodium hydrogen phosphate | 0.5 |
| Ammonium persulfate | 0.5 |
| Hydroxyethyl cellulose (as a 2% solution having a viscosity of 10 cps.) | 3 |
| Water | 100 |
| *EO-ethylene oxide | |
| Total | 109 |

| Monomer Charge | Parts |
|---|---|
| Methyl methacrylate (MMA) | 32 |
| 2-Ethylhexyl acrylate (2-EHA) | 65 |
| Nitrate salt of Dimethylaminopropyl methacrylate/ Epichlorohydrin adduct (DMAPMA/Epi · $NO_3$) (90% soln.) | 3.3 |
| | 100.3 |

The initial aqueous solution was charged to the reactor, heated to 75°C, and maintained at this temperature while the monomer charge was slowly added over 3 hours. After the slow addition was completed, heating was continued for 1 h. The emulsion had a solids content of 51%, viscosity of 3500 cps., and pH of 2.2. The Tg of the polymer was –14°C. Using this alkaline-curable cationic acrylate polymer emulsion, a cement mortar was formulated as follows:

| | Parts |
|---|---|
| Portland cement | 100 |
| Standard sand | 300 |
| Acrylate emulsion | 39.2 (20 as polymer solids) |
| Defoamer NOPCO NXZ | 1 |
| Water | 45 |

It was poured into a 4.5 x 4.5 x 0.5 cm frame placed on top of a 7.5 x 7.5 x 0.5 cm glazed semi-porcelain tile and air cured for three weeks under standard conditions (20°C, 65% relative humidity).

Part B – Comparative Acrylate Emulsions

An emulsion (B-1) of a commercially available cationic acrylate polymer, i.e., dimethylaminoethyl methacrylate/2-ethylhexyl acrylate/methyl methacrylate (DMAEMA/2-EHA/MMA), was used in place of the polymer emulsion of Part A. The amount used was sufficient to provide 20 parts by weight of polymer solids. The emulsion had a solids content of 40%, viscosity of 150 cps and pH of 5.4. The Tg of the polymer was –5°C.

An emulsion (B-2) of a commercially available anionic acrylate polymer, i.e., acrylic acid/2-ethylhexyl acrylate/styrene (AA/2-EHA/St) was used in place of the polymer emulsion of Part A. It was used in an amount sufficient to provide 20 parts by weight of polymer solids. The emulsion had a solids content of 58%, viscosity of 700 cps and pH of 8. The Tg of the polymer was –20°C.

The tensile butt adhesive strength of the three assemblies was measured using a Kenken type tester. The results are shown in Table I.

Table I

| Polymer Emulsion | Adhesive ($kg./cm^2$) Strength | Breaking Behavior (% failure) Interface | Mortar or adherent |
|---|---|---|---|
| Part A | 6.8 | 0 | 100 |
| Part B-1* | 3.1 | 90 | 10 |
| Part B-2* | 2.6 | 100 | 0 |
| *Comparative | | | |

The results show that the cement mortar containing the alkaline curable quarternary ammonium salt monomer had excellent adhesion. The comparative acrylate polymers which had a Tg below 10°C and one of which was cationic, showed much poorer adhesion. The results also show that the cement mortar containing the alkaline-curable monomer failed in cohesive strength (i.e., failed in the mortar or adherent) rather than at the interface with the adherent, whereas the cement mortar containing the comparative acrylate polymers failed in adhesive strength (i.e., failed at the interface).

EXAMPLE II

The polymerization was carried out as in Example I except that the initial charge was as shown below and the monomer charge was as indicated in Table II.

| Initial Charge | Parts |
|---|---|
| Polyoxyethylene octylphenol (15 moles EO) | 5.0 |
| Polyoxyethylene octylphenol (35 moles EO) | 5.0 |
| Potassium persulfate | 0.5 |
| Sodium hydrogen phosphate | 1.0 |
| Water | 100 |
| Total | 111.5 |

Table II

| No. | Monomer Composition (parts) | | | | | Properties of Emulsion | | | Polymer |
|---|---|---|---|---|---|---|---|---|---|
| | DMAEMA/Epi. Adduct (90% Chloride soln.) | MMA | BA | 2-EHA | ST | Solids (%) | Visc. (cps.) | PH | Tg (°C) |
| 2* | 0 | 30 | 70 | | | 51.5 | 450 | 2.7 | −11 |
| 3 | 0.55 | 29.5 | 70 | | | 51.4 | 430 | 2.5 | −13 |
| 4 | 1.1 | 29.0 | 70 | | | 51.3 | 440 | 2.6 | −14 |
| 5 | 3.3 | 27.0 | 70 | | | 50.9 | 460 | 2.7 | −14 |
| 6 | 8.8 | 22.0 | 70 | | | 50.8 | 550 | 2.5 | −15 |
| 7 | 11.0 | 20.0 | 70 | | | 50.6 | 300 | 2.7 | −16 |
| 8 | 15.6 | 16.0 | 70 | | | 50.6 | 290 | 2.6 | −16 |
| 9 | 4.4 | | 70 | | 26 | 51.6 | 610 | 2.6 | −12 |
| 10** | 5.5 | 47 | | 48 | | 50.9 | 420 | 2.7 | +13 |
| 11** | 5.5 | 5 | 90 | | | 50.7 | 490 | 2.6 | −48 |

*Comparative – no alkaline-curable monomer
** Comparative – outside Tg range

The DMAEMA/Epi adduct is an adduct of dimethylaminoethyl methacrylate and epichlorohydrin. Using the resulting emulsions, cement mortars were formulated as follows:

| | Parts |
|---|---|
| Rapid hardening cement | 100 |
| Silica sand (No. 6) | 100 |
| Silica sand (No. 7) | 100 |
| Silica sand (No. 8) | 100 |
| Polymer emulsion | 20 (polymer solids) |
| Defoamer | 0.5 |
| Water | 50 |

The mortars were poured onto four different adherents and cured for two weeks under the standard conditions. The adherents and their dimensions were as follows:

| | |
|---|---|
| SS41 Steel | (6.0 × 9.0 × 0.9 cm) |
| Plywood lauan | (7.5 × 7.5 × 0.9 cm) |
| Semi-porcelain tile | (7.5 × 7.5 × 0.5 cm) |
| Cement mortar brick | (7.0 × 7.0 × 2.0 cm) |

The adhesive test results are shown in Table III. The assemblies other than the plywood assembly were subjected to an aging test which involved the following cycles: submersion in water for 2 days at room temperature followed by drying for 2 days at 80°C; after 5 such cycles the assembly was cured for 1 week under standard conditions. The sample designated No. 12 was obtained by modifiyng the polymer emulsion designated No. 10 with 5% of the plasticizer dibutyl phthalate to lower the apparent Tg of the emulsion from +13°C to 0°C.

TABLE III – Adhesive Strength (kg/cm²)

| No. | Steel | | Semi porcelain | | Cement mortar | | Plywood | |
|---|---|---|---|---|---|---|---|---|
| | Air-Cured | After Aging | Air-Cured | After Aging | Air-Cured | After Aging | Air-Cured | After Aging |
| 2* | 5.7 | 8.3 | 4.1 | 1.2 | 5.4 | 8.6 | 4.0 | – |
| 3 | 10.6 | 16.7 | 6.0 | 5,6 | 11.7 | 15.6 | 8.6 | – |
| 4 | 12.2 | 17.8 | 6.4 | 5.9 | 13.2 | 17.2 | 9.0 | – |
| 5 | 13.0 | 18.0 | 7.6 | 6.1 | 13.9 | 18.7 | 9.2 | – |
| 6 | 14.1 | 19.2 | 7.2 | 5.8 | 15.2 | 20.6 | 9.5 | – |
| 7 | 31.2 | 19.0 | 8.0 | 6.0 | 14.9 | 18.6 | 8.0 | – |
| 8 | 9.0 | 4.4 | 6.4 | 3.1 | 16.6 | 9.0 | 8.8 | – |
| 9 | 14.9 | 18.6 | 6.8 | 5.9 | 13.4 | 18.1 | 8.6 | – |
| 10** | 16.8 | 8.0 | 7.8 | 2.4 | 19.2 | 9.3 | 8.8 | – |
| 11** | 10.1 | 12.0 | 5.2 | 5.0 | 11.1 | 10.5 | 9.0 | – |
| 12*** | 14.4 | 13.9 | 7.0 | 6.0 | 18.2 | 17.2 | 8.1 | – |

* Comparative – no alkaline-curable monomer
** Comparative – outside Tg range
*** Same as No. 10 but modified with plasticizer

The results show that the cement admixtures containing the alkaline-curable cationic quaternary ammonium salt monomers had excellent adhesion to all substrates. The comparative cement mixture (see No. 2), in which a typical acrylate polymer emulsion i.e., an emulsion containing a polymer with no alkaline-curable polymer, was used showed both poor initial adhesion and poor adhesion after aging. The results also show that even when the alkaline-curable cationic quaternary ammonium salt monomer was used, if the Tg is above 10°C (see No. 10), the adhesion after aging was unsatisfactory. When this polymer was used with the plasticizer, it was satisfactory (see No. 12). The results further show that an alkalicurably polymer with too low a Tg was inferior to the higher Tg polymers (see No. 11). The appropriate Tg range for the polymer is thus demonstrated.

EXAMPLE III

The polymerizations were carried out as in Example II using the monomers shown in Table IV.

TABLE IV

| Monomer Composition | No. | | | | |
|---|---|---|---|---|---|
| | 13 | 14* | 15* | 16* | 17* |
| Nitrate Salt of Dimethylaminoethyl methacrylate/ Epichlorohydrin adduct (DMAEMA/Epi · $NO_3$). (90% Nitrate soln.) | 3.3 | – | – | – | – |
| Methyl methacrylate (MMA) | 27 | 27 | 25 | 27 | 26 |
| 2-Ethylhexyl acrylate (2-EHA) | 70 | 70 | 70 | 70 | 70 |
| Other monomer** | – | 3 AA | 5 GMA | 3 DMAEA | 4 DMAPMAm |
| Properties of the emulsion polymer | | | | | |
| Solids (%) | 50.5 | 50.8 | 50.7 | 51.0 | 50.7 |
| Viscosity (cps.) | 300 | 810 | 240 | 280 | 250 |
| pH | 2.6 | 2.4 | 2.5 | 2.8 | 2.7 |
| Tg (°C) | –23 | –23 | –25 | –22 | –24 |

*Comparative

Using the resulting polymer emulsions, the following cement admixtures (designated A and B) were formulated:

| (A) | Cement composition same as in Example II | |
|---|---|---|
| | | Parts |
| (B) | White Portland cement | 100 |
| | Calcium Carbonate | 50 |
| | Polymer emulsion | 100 (polymer solids) |
| | Methyl cellulose | 0.2 |
| | Defoamer | 3 |
| | Water | appropriate amount |

The cement mixtures were thoroughly agitated and cement paints were made. Films (1 mm thick) were formed by immediately casting the paint on a Teflon plastic plate. After curing for one month, the cement films were tested for tensile strength (maximum point) and elongation (% at break) at –10°, 20°, and 50°C using an Instron tester at a tensile speed of 200 mm/min.

The results are shown in Tables V and VI. The emulsion designated No. 18 was prepared using a cationic surfactant in place of the alkaline-curable cationic quaternary ammonium salt monomer and the polymerization was carried out using methyl methacrylate/2-ethylhexyl acrylate (35/65) as the monomers and lauryltrimethylammonium chloride as the surfactant. The polymerization was carried out as in Example I.

TABLE V – Adhesion (kg/cm$^2$) of Cement A

| | | Polymer Emulsion No. | | | | | |
|---|---|---|---|---|---|---|---|
| Adherent | Test Conditions | 13 | 14* | 15* | 16* | 17* | 18* |
| Steel | Air-Cured | 12.7 | 12.0 | 13.0 | 11.6 | 13.2 | – |
| | After Aging | 17.2 | 13.6 | 8.8 | 9.0 | 8.8 | – |
| Semi porcelain tile | Air-Cured | 5.9 | 4.3 | 3.0 | 4.0 | 4.2 | – |
| | After Aging | 5.2 | 2.7 | 2.0 | 3.0 | 3.3 | – |
| Cement mortar | Air-Cured | 12.6 | 11.4 | 12.2 | 14.2 | 13.2 | – |
| | After Aging | 15.4 | 16.3 | 17.2 | 9.3 | 8.8 | – |
| Plywood (Lauan) | Air-Cured | 7.7 | 5.4 | 5.6 | 5.0 | 4.3 | – |
| | After Aging | – | – | – | – | – | – |

TABLE VI Properties of Cement Film B

| | | Emulsion No. | | | | | |
|---|---|---|---|---|---|---|---|
| | | 13 | 14* | 15* | 16* | 17* | 18* |
| Tensile strength (kg/cm$^2$) | –10°C | 42.6 | 125 | 110 | 101 | 132 | 90.3 |
| | 20°C | 12.6 | 15.2 | 13.6 | 9.0 | 10.6 | 5.0 |
| | 50°C | 5.0 | 3.0 | 2.5 | 3.4 | 3.7 | 1.9 |
| Maximum elongation (%) | –10°C | 220 | 40 | 30 | 105 | 90 | 105 |
| | 20°C | 920 | 450 | 400 | 800 | 720 | 1100 |
| | 50°C | 1940 | 2410 | 2200 | 2900 | 2500 | 2760 |

*Comparative

The results show that the cement admixture containing the alkaline-curable cationic quaternary ammonium salt monomer (No. 13) was superior not only in adhesion to various adherents but also in the balance of tensile strength and elongation in comparison to the typical cement compounds (Nos. 14–18). Additionally, the variation in properties within the temperature range of –10°C to +50°C are slight, and accordingly the composition can be applied over a wide range of temperatures. The typical cement admixtures showed a marked decrease in their performance after aging, whereas the cement admixture herein (No. 13) maintained the initial adhesion level. It is believed this difference is due to the flexibility of this cement mortar which allows for temperature variation. Typical cement mortars are not flexible.

EXAMPLE VI

The polymerization was carried out as in Example I except that the reaction temperature was 70–75°C and the slow addition time was 4 hours. The charges are described below:

| Initial Charge | Parts |
|---|---|
| Polyoxyethylene nonylphenol (20 moles EO) | 6.0 |
| Ammonium persulfate | 0.4 |
| Sodium dihydrogen phosphate | 0.5 |
| Water | 100 |
| Total | 106.9 |

| Monomer Charge | Parts |
|---|---|
| Methyl methacrylate (MMA) | 10 |
| Styrene (St) | 15 |
| 2-Ethylhexyl acrylate (2-EHA) | 42 |
| Ethyl acrylate (EA) | 30 |
| Nitrate salt of Dimethylaminopropyl methacrylamide/Epichlorohydrin Adduct (70% Nitrate Soln. (DMAPMA/Epi · $NO_3$) | 4.3 |
| Total | 101.3 |

The emulsion had a solids content of 50.2%, viscosity of 400 cps, and pH of 3.1. The polymer had a Tg of −14°C,

Using the above emulsion, a cement mortar was formulated as follows:

| | |
|---|---|
| Rapid hardening cement | 100 |
| Silica sand (No. 7) | 100 |
| Silica sand (No. 8) | 100 |
| Silica sand (No. 9) | 100 |
| Resin emulsion | 30 (as polymer solids) |
| Defoamer | 2 |
| Water | Appropriate amount |

The flow value (determined according to ASTM C230-55T) of the final cement mortar was adjusted to 170 mm. Is was poured onto a 5 year old epoxy-coated floor. Is was smoothed to a thickness of 2–5 mm by troweling and cured for 1 week in air. The adhesion of the cement mortar to the surface was 8.4 kg/cm$^2$ after 7 days curing. Cements containing the comparative polymer emulsions B-1 and B-2 of Example I were also applied; their adhesion was poor (both 0 kg/cm$^2$).

EXAMPLE VII

The polymerization was carried out as in Example I using the following:

| Initial Charge | Parts |
|---|---|
| Polyoxyethylene nonylphenol (25 moles EO) | 7.0 |
| Potassium persulfate | 0.6 |
| Water | 70 |
| Total | 77.6 |

| Monomer Charge | Parts |
|---|---|
| Butylmethacrylate (BMA) | 15 |
| Styrene (St) | 10 |
| Ethyl acrylate (EA) | 25 |
| Butyl acrylate (BA) | 45 |
| Chloride salt of Dimethylaminoethyl methacrylate/Epichlorohydrin adduct (DMAEMA/Epi · Cl) (90% soln.) | 5.5 |
| Total | 100.5 |

The emulsion had a solids content of 59.1%, viscosity of 1520 cps, and pH of 2.3. The polymer had a Tg of −18°C.

Using the above polymer emulsion, the following cement mortar was formulated:

| | |
|---|---|
| Rapid hardening cement | 100 |
| Silica sand (No. 7) | 100 |
| Polymer emulsion | 50 (polymer solids) |
| Defoamer | 3 |
| Water | Appropriate amount |

The flow value of the cement mortar was adjusted to 200 mm. The fresh cement mortar was patched on the hollow places of asphalt mixed with concrete using a trowel and the surface was flattened. The cement mortar was cured for 1 week. A urethane coating for flooring was coated on the cement mortar with the thickness of the coating being 5 mm. After 1 year, the constructed portion were examined throughly; no degradation was detected. The adhesion to both the asphalt concrete resin and urethane resin was satisfactory. Similar evaluations were carried out with the comparative resins (B-1 and B-2 of Example I). The results were poor. The cement mortar swelled due to the absorption of water from the under layer. The surface of the coated urethane became uneven after 6 months.

EXAMPLE VIII (comparative)

This example shows that the lower alkyl acrylates ($C_1$ and $C_2$) are poor in hydrolytic stability. A ethyl acrylate/2-ethylhexyl acrylate/dimethylaminopropyl methacrylamide/epichlorohydrin adduct as the chloride salt (87.7/9.7/2.6) having a Tg of −28° was evaluated. A butyl acrylate/methyl methacrylate/acrylic acid (50/49/1) having a Tg of +2°C was also evaluated. The film weights minus loss (%) after immersion in alkali is shown below.

| Polymer | Days Immersion | | | | | |
|---|---|---|---|---|---|---|
| | 2 | 5 | 12 | 19 | 33 | 47 |
| EA/2-EHA/DMAPMA.EPI adduct | | | | | | |
| In saturated cement solution* | 1.1 | 1.7 | 1.8 | 2.3 | 2.5 | 2.8 |
| In 5% NaOH solution | 0.7 | 1.6 | 1.8 | 2.2 | 3.4 | 4.4 |
| BA/MMA/AA | | | | | | |
| In saturated cement solution* | 0.6 | 1.1 | 1.5 | 2.0 | 2.2 | 2.2 |
| In 5% NaOH solution | 0.2 | 1.1 | 1.5 | 2.0 | 2.2 | 2.2 |
| *about pH 12 | | | | | | |

The results show the butyl acrylate-based film showed better alkali-stability.

Now that the preferred embodiments of the invention have been described in detail, various modifications and improvements thereon will become readily apparent to those skilled in the art. Accordingly, the spirit and scope of the invention are to be limited only by the appended claims and not by the foregoing specification.

## Claims

1. A cement mixture comprising a cement and an effective amount of an aqueous emulsion of an acrylate polymer with a Tg between below 10°C and –40°C, the polymer comprising (a) about 25–99.5% of a hydrolytically stable acrylate or methacrylate monomer, (b) about 0.5–15% of an alkaline-curable cationic quarternary ammonium salt monomer, (c) 0–70% of a hydrolytically-stable monomer other an (a) or (b), and (d) 0–30% of a hydrolytically-unstable monomer other than (a) or (b) with the percentages being by weight and totaling 100%; wherein the acrylate unit in the polymer and has the formula

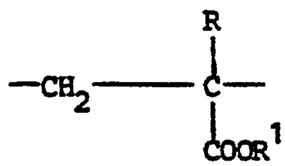

and the alkaline-curable cationic quarternary ammonium unit in the polymer has the formula

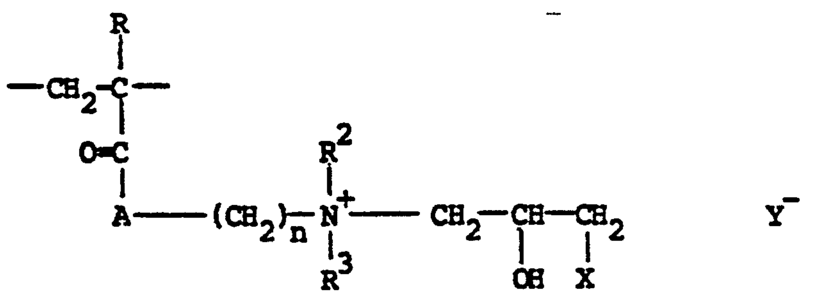

where R is hydrogen or a methyl group; $R^1$ is a $C_1$–$C_{12}$ alkyl group or a $C_6$–$C_{12}$ cycloalkyl group with the proviso that $R^1$ is not a methyl or ethyl group when R is hydrogen; $R^2$ and $R^3$ are methyl or ethyl groups and $R^2$ and $R^3$ may be the same or different; A is –O– or –NH–; X is chlorine, bromine or iodine; $Y^-$ represents an organic or inorganic anion; and n is 2 or 3.

2. The cement mixture of Claim 1, wherein the acrylate polymer has a Tg within the range of 0° to –30°C.

3. The cement mixture of Claim 1, wherein the acrylate polymer has a Tg within the range of 0° to –10°C.

4. The cement mixture of Claim 1, wherein the monomer of (a) is selected from the group consisting of methyl methacrylate, 2-ethylhexyl acrylate, and butyl acrylate.

5. The cement mixture of Claim 1, wherein the monomer of (b) is present in an amount of 1–10%.

6. The cement mixture of Claim 5, wherein the monomer is selected from the group consisting of the salts of a dimethylaminopropyl methacrylate adduct with an epihalohydrin, a dimethylaminoethyl methacrylate adduct with an epihalohydrin, and a dimethylaminopropyl methacrylamide adduct with an epihalohydrin.

7. The cement mixture of Claim 6, wherein the epihalohydrin is epichlorohydrin.

8. The cement mixture of Claim 6, wherein the salt is the nitrate or chloride salt.

9. The cement mixture of Claim 5, wherein the monomer is the nitrate or chloride salt of the adduct of dimethylaminopropylmethacrylate and epichlorohydrin, or of dimethylaminoethyl methacrylate and epichlorohydrin, or of dimethylaminopropyl methacrylamide and epichlorohydrin.

10. The cement mixture of Claim 1, wherein the monomer of (c) is selected from the group consisting of styrene, acrylic acid, glycidyl methacrylate, dimethylaminoethyl acrylate, and dimethylaminopropyl methacrylamide.

11. The cement mixture of Claim 1, wherein the monomer of (d) is selected from the group consisting of methyl or ethyl acrylate.

12. The cement mixture of Claim 1, further comprising sand.

13. The cement mixture of Claim 12, wherein the amount of polymer solids present is about 1–40% based on the cement.

14. The cement mixture of Claim 9, wherein the amount of polymer solids present is about 25–200% based on the cement.

15. An additive composition for improving cement, which comprises an aqueous emulsion of an acrylate polymer with a Tg between below 10°C and –40°C, the polymer comprising (a) about 25–85% of an acrylate or methacrylate monomer, (b) about 0.5–15% of an alkaline-curable cationic quarternary ammonium salt monomer, (c), 0–70% of a hydrolytically-stable monomer other than (a) or (b), and (d) 0–30% of a hydrolytically-unstable monomer other than (a) or (b), with the percentages being by weight and totaling 100%; wherein the acrylate unit in the polymer and has the formula

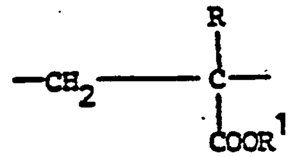

and the alkaline-curable cationic quartenary ammonium unit in the polymer has the formula

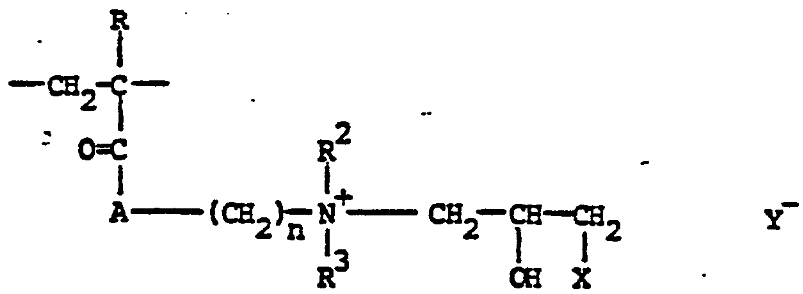

where R is hydrogen or a methyl group; $R^1$ is a $C_1$–$C_{12}$ alkyl group or a $C_6$–$C_{12}$ cycloalkyl group with the proviso that $R^1$ is not a methyl or ethyl group when R is hydrogen; $R^2$ and $R^3$ are methyl or ethyl groups and $R^2$ and $R^3$ may be the same or different; A is –O– or –NH–; X is chlorine, bromine or iodine; $Y^-$ represents an organic or inorganic anion; and n is 2 or 3; whereby the flexibility and adhesion of the cement to a substrate is improved.

16. The additive composition of Claim 15, wherein the acrylate polymer has a Tg within the range of 0° to –30°C; wherein the monomer of (a) is selected from the group consisting of methyl methacrylate, 2-ethylhexyl acrylate, and butyl acrylate; wherein the monomer of (b) is present in an amount of 1–10% and is selected from the group consisting of the nitrate or chloride salt of a dimethylaminopropyl methacrylate adduct with epichlorohydrin, a dimethylaminoethyl adduct with epichlorohydrin, and a dimethylaminopropyl methacrylamide adduct with epichlorohydrin; wherein the monomer of (c) is selected from the group consisting of styrene, acrylic acid, glycidyl methacrylate, dimethylaminoethyl acrylate, and dimethylaminopropyl methacrylamide.

17. A method for improving the adhesion and flexibility of a cement mixture which comprises the step of adding to the cement an aqueous emulsion of an acrylate polymer with a Tg between below 10°C and –40°C, the polymer comprising (a) about 25–99.5% of an acrylate or methacrylate monomer, (b) about 0.5–15% of an alkaline-curable cationic quartenary ammonium salt monomer, (c) 0–70% of a hydrolytically-stable monomer other than (a) or (b), and (d) 0–30% of a hydrolytically-unstable other than (a) or (b), with the percentages being by weight and totaling 100%; wherein the acrylate unit in the polymer and has the formula

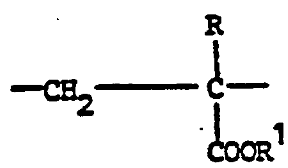

and the alkaline-curable cationic quaternary ammonium unit in the polymer has the formula

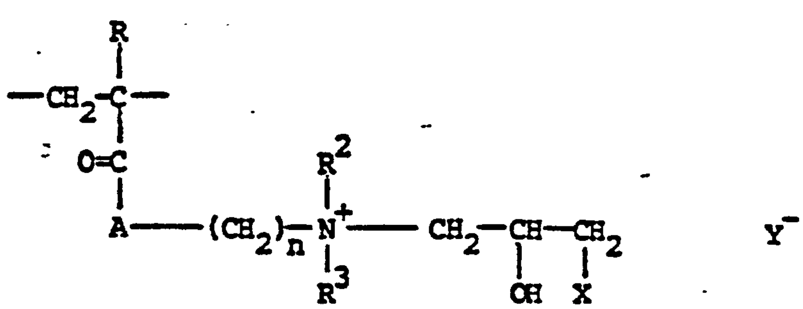

where R is hydrogen or a methyl group; $R^1$ is a $C_1$–$C_{12}$ alkyl group or a $C_6$–$C_{12}$ cycloalkyl group with the

proviso that $R^1$ is not a methyl or ethyl group when R is hydrogen; $R^2$ and $R^3$ are methyl or ethyl groups and $R^2$ and $R^3$ may be the same or different; A is –O– or –NH–; X is chlorine, bromine or iodine; $Y^-$ represents an organic anion; and n is 2 or 3; the aqueous emulsion being added in an amount sufficient to provide about 1–200% by weight of polymer solids based on the cement solids.

18. The method of Claim 17, wherein the acrylate polymer has a Tg within the range of 0° to –30°C; wherein the monomer of (a) is selected from the group consisting of methyl methycrylate, 2-ethylhexyl acrylate, and butyl acrylate; wherein the monomer of (b) is present in an amount of 1–10% and is selected from the group consisting of the nitrate or chloride salt of a dimethylaminopropyl methacrylate adduct with epichlorohydrin, a dimethylaminoethyl metharylate adduct with epichlorohydrin and a dimethylaminopropyl methacrylamide adduct with epichlorohydrin; wherein the monomer of (c) is selected from the group consisting of styrene, acrylic acid, glycidyl methacrylate, dimethylaminoethyl acrylate, and dimethylaminopropyl methacrylamide; the aqueous emulsion being added in an amount of about 5–25% when the cement admixture is to be used as a mortar or about 40–100% when the cement admixture is to be used as a paint.

**Patentansprüche**

1. Zementmischung, umfassend einen Zement und eine wirksame Menge einer wäßrigen Emulsion eines Acrylatpolymers mit einer Tg zwischen werniger als 10°C und –40°C, wobei das Polymer umfaßt: (a) etwa 25 bis 99,5% eines hydrolytisch stabilen Acrylat- oder Methacrylatmonomers, (b) etwa 0,5 bis 15% eines alkalisch härtbaren kationischen quaternären Ammoniumsalzmonomers, (c) 0 bis 70% eines hydrolytisch stabilen Monomers, das von (a) oder (b) verschieden ist, und (d) bis 30% eines hydrolytisch instabilen Monomers, das von (a) oder (b) verschieden ist, wobei die Prozentsätze auf das Gewicht bezogen sind und insgesamt 100% ausmachen, worin die Acrylateinheit im Polymer die Formel

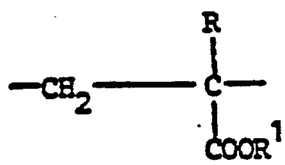

hat und die alkalisch härtbare kationische quaternäre Ammoniumeinheit im Polymer die Formel

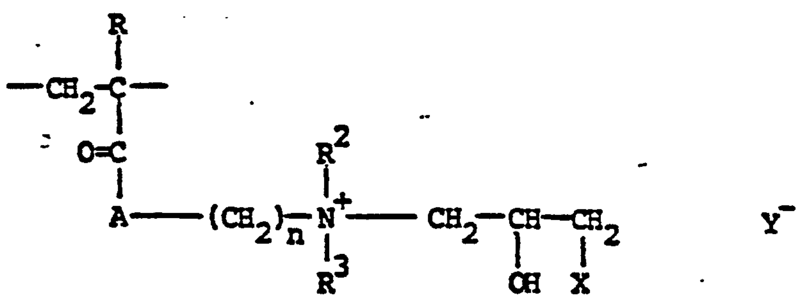

hat, worin R Wasserstoff oder eine Methylgruppe ist, $R^1$ eine $C_1$–$C_{12}$-Alkylgruppe oder eine $C_6$–$C_{12}$-Cycloalkylgruppemit der Maßgabe ist, daß $R^1$ keine Methyl- oder Ethylgruppe ist, wenn R Wasserstoff ist; $R^2$ und $R^3$ Methyl- oder Ethylgruppen sind und $R^2$ und $R^3$ gleich oder verschieden sein können; A -O- oder –NH– ist; X Chlor, Brom oder Jod ist; $Y^-$ ein organisches oder anorganisches Anion ist und n 2 oder 3 ist.

2. Zementmischung nach Anspruch 1, worin das Acrylatpolymer eine Tg im Bereich von 0 bis –30°C hat.

3. Zementmischung nach Anspruch 1, worin das Acrylatpolymer eine Tg im Bereich von 0 bis –10°C hat.

4. Zementmischung nach Anspruch 1, worin das Monomer von (a) aus der aus Methylmethacrylat, 2-Ethylhexylacrylat und Butylacrylat bestehenden Gruppe ausgewählt ist.

5. Zementmischung nach Anspruch 1, worin das Monomer von (b) in einer Menge von 1 bis 10% anwesend ist.

6. Zementmischung nach Anspruch 5, worin das Monomer aus der Gruppe ausgewählt ist, die aus den Salzen eines Dimethylaminopropylmethacrylat-Adduktes mit einem Epihalogenhydrin, eines Dimethylaminoethylmethacrylat-Adduktes mit einem Epihalogenhydrin und eines Dimethylaminopropylmethacrylamid-Adduktes mit einem Epihalogenhydrin besteht.

7. Zementmischung nach Anspruch 6, worin das Epihalogenhydrin Epichlorhydrin ist.

8. Zementmischung anch Anspruch 6, worin das Salz das Nitrat- oder Chlorid-Salz ist.

9. Zementmischung nach Anspruch 5, worin das Monomer das Nitrat-Salz oder Chlorid-Salz des Adduktes von Dimethylaminopropylmethacrylat und Epichlorhydrin, von Dimethylaminoethylmethacrylat und Epichlorhydrin oder von Dimethylaminopropylmethacrylamid ist.

10. Zementmischung nach Anspruch 1, worin das Monomer von (c) aus der Gruppe ausgewählt ist, die aus Styrol, Acrylsäure, Glycidylmethacrylat, Dimethylaminoethylacrylat und Dimethylaminopropylmethacrylamid besteht.

11. Zementmischung nach Anspruch 1, worin das Monomer von (d) aus der aus Methyl- oder Ethylacrylat bestehenden Gruppe ausgewählt ist.

12. Zementmischung nach Anspruch 1, die außerdem Sand umfaßt.

13. Zementmischung nach Anspruch 12, worin die Menge der anwesenden Polymerfeststoffe etwa 1 bis 40%, bezogen auf den Zement, beträgt.

14. Zementmischung nach Anspruch 9, worin die Menge der anwesenden Polymerfeststoffe etwa 25 bis 200%, bezogen auf den Zement, beträgt.

15. Zuschlagzusammensetzung zur Verbesserung von Zement, die eine wäßrige Emulsion eines Acrylatpolymers mit einer Tg zwischen weniger als 10°C und –40°C umfaßt, wobei das Polymer umfaßt: (a) etwa 25 bis 85% eines Acrylat- oder Methacrylatmonomers, (b) etwa 0,5 bis 15% eines alkalisch härtbaren kationischen quaternären Ammoniumsalzmonomers, (c) 0 bis 70% eines hydrolytisch stabilen Monomers, das von (a) oder (b) verschieden ist, und (d) 0 bis 30% eines hydrolytisch instabilen Monomers, das von (a) oder (b) verschieden ist, wobei die Prozentsätze auf das Gewicht bezogen sind und insgesamt 100% ausmachen, worin die Acrylateinheit im Polymer die Formel

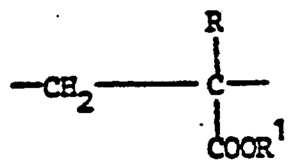

hat und die alkalisch härtbare kationische quaternäre Ammoniumeinheit im Polymer die Formel

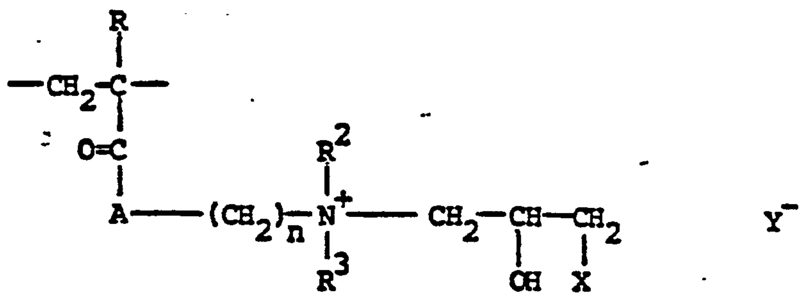

hat, worin R Wasserstoff oder eine Methylgruppe ist, $R^1$ eine $C_1$–$C_{12}$-Alkylgruppe oder eine $C_6$–$C_{12}$-Cycloalkylgruppe mit der Maßgabe ist, daß $R^1$ keine Methyl- oder Ethylgruppe ist, wenn R Wasserstoff ist; $R^2$ und $R^3$ Methyl- oder Ethylgruppen sind und $R^2$ und $R^3$ gleich oder verschieden sein können; A -O- oder –NH– ist; X Chlor, Brom oder Jod ist; $Y^-$ ein organisches oder anorganisches Anion ist und n gleich 2 oder 3 ist, wodurch die Flexibilität und Haftung des Zementes an einem Substrat verbessert wird.

16. Zuschlagzusammensetzung nach Anspruch 15, worin das Acrylatpolymer eine Tg im Bereich von 0 bis –30°C hat, das Monomer von (a) aus der aus Methylmethacrylat, 2-Ethylhexylacrylat und Butylacrylat bestehenden Gruppe ausgewählt ist, das Monomer von (b) in einer Menge von 1 bis 10% anwesend ist und das der aus dem Nitrat- oder Chlorid-Salz eines Dimethylaminopropylmethacrylat-Adduktes mit Epichlorhydrin, eines Dimethylaminoethylmethacrylat-Adduktes mit Epichlorhydrin und eines Dimethylaminopropylmethacrylamid-Adduktes mit Epichlorhydrin bestehenen Gruppe ausgewählt ist, worin das Monomer von (c) aus der aus Styrol, Acrylsäure, Glycidylmethacrylat, Dimethylaminoethylacrylat und Dimethylaminopropylmetharylamid bestehenden Gruppe ausgewählt ist.

17. Verfahren zur Verbesserung der Haftung und Flexibilität einer Zementmischung, das die Stufe der Zugabe einer wässrigen Emulsion eines Acrylatpolymers mit einer Tg zwischen weniger als 10°C und –40°C zum Zement umfaßt, wobei das Polymer umfaßt: (a) etwa 25 bis 99,5% eines Acrylat- oder Methacrylatmonomers, (b) etwa 0,5 bis 15% eines alkalisch härtbaren kationischen quaternären Ammoniumsalzmonomers, (c) 0 bis 70% eines hydrolytisch stabilen Monomers, das von (a) oder (b) verschieden ist, und (d) 0 bis 30% eines hydrolytisch instabilen Monomers, das von (a) oder (b) verschieden ist, wobei die Prozentsätze auf das Gewicht bezogen sind und insgesamt 100% ausmachen, worin die Acrylateinheit im Polymer die Formel

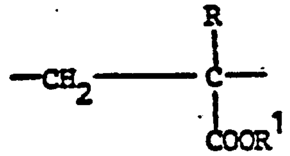

hat und die alkalisch härtbare kationische quaternäre Ammoniumeinheit im Polymer die Formel

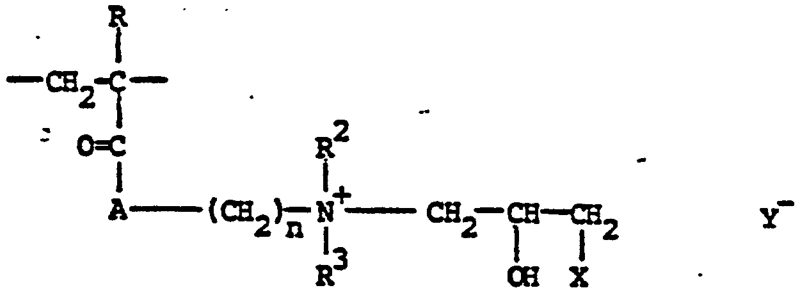

hat, worin R Wasserstoff oder eine Methylgruppe ist, $R^1$ eine $C_1$–$C_{12}$-Alkylgruppe oder eine $C_6$–$C_{12}$-Cycloalkylgruppe mit der Maßgabe ist, daß $R^1$ keine Methyl- oder Ethylgruppe ist, wenn R Wasserstoff ist; $R^2$ und $R^3$ Methyl- oder Ethylgruppen sind und $R^2$ und $R^3$ gleich oder verschieden sein können; A –O– oder –NH– ist; X Chlor, Brom oder Jod ist; $Y^-$ ein organisches Anion ist und n gleich 2 oder 3 ist, wobei die wässrige Emulsion in ausreichender Menge zugefügt wird, um etwa 1 bis 200 Gew.-% Polymerfeststoffe, bezogen auf die Zementfeststoffe, zu ergeben.

18. Verfahren nach Anspruch 17, worin das Acrylatpolymer eine Tg im Bereich von 0°C bis –30°C hat, das Monomer von (a) aus der aus Methylmethacrylat, 2-Ethylhexylacrylat und Butylacrylat bestehenden Gruppe ausgewählt ist, das Monomer von (b) in einer Menge von 1 bis 10% anwesend ist und aus der aus dem Nitrat- oder Chlorid-Salz eines Dimethylaminopropylmethacrylat-Adduktes mit Epichlorhydrin, eines Dimethylaminoethylmethacrylat-Adduktes mit Epichlorhydrin und eines Dimethylaminopropylmethacrylamid-Adduktes mit Epichlorhydrin bestehenden Gruppe ausgewählt ist, worin das Monomer von (c) aus der aus Styrol, Acrylsäure, Glycidylmethacrylat, Dimethylaminoethylacrylat und dimethylaminopropylmethacrylamid bestehenden Gruppe ausgewählt ist, wobei die wässrige Emulsion in einer Menge von etwa 5 bis 25% zugefügt wird, wenn die Zementmischung als Mörtel verwendet werden soll, oder von etwa 40 bis 100%, wenn die Zementmischung als eine Farbe verwendet werden soll.

## Revendications

1. Mélange de ciment comprenant un ciment et une quantité efficace d'une émulsion aqueuse d'un polymère d'acrylates ayant une Tg comprise entre –40°C et +10°C, le polymère comprenant (a) environ 25 à 99,5% d'un acrylate ou méthacrylate monomère hydrolytiquement stable, (b) environ 0,5 à 15% d'un monomère constitué par un sel d'ammonium quaternaire cationique à prise alcaline, (c) 0 à 70% d'un monomère hydrolytiquement stable autre que (a) ou (b), et (d) 0 à 30% d'un monomère hydrolytiquement instable autre que (a) ou (b), les pourcentages étant en poids et atteignant au total 100%, les groupes acrylate dans le polymère étant représentés par la formule

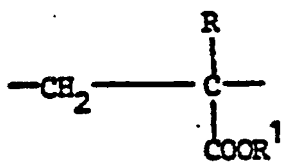

et les groupes de sel d'ammonium quaternaire cationique à prise alcaline dans le polymère étant représentés par la formule

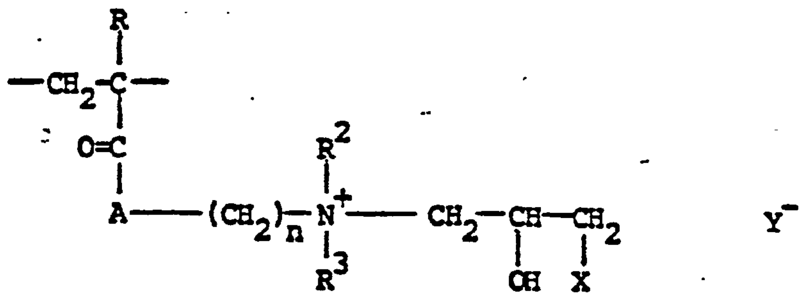

dans lequel R est de l'hydrogène ou un groupe méthyle, $R^1$ est un groupe alcoyle à 1 à 12 atomes de carbone ou un groupe cycloalcoyle à 6 à 12 atomes de carbone, sous réserve que $R^1$ ne soit pas un groupe méthyle ou éthyle lorsque R est de l'hydrogène, $R^2$ et $R^3$ sont des groupes méthyle ou éthyle et $R^2$ et $R^3$ peuvent être identiques ou différents, A est –O– ou –NH–, X est du chlore, du brome ou de l'iode, $Y^-$ est un anion organique ou inorganique et n est égal à 2 ou 3.

2. Mélange de ciment selon la revendication 1, dans lequel le polymère d'acrylates a une Tg comprise entre 0 et –30°C.

3. Mélange de ciment selon la revendication 1, dans lequel le polymère d'acrylates a une Tg comprise entre 0 et –10°C.

4. Mélange de ciment selon la revendication 1, dans lequel le monomère (a) est choisi dans le groupe comprenant le méthacrylate de méthyle, l'acrylate de 2-éthylhexyle et l'acrylate de butyle.

5. Mélange de ciment selon la revendication 1, dans lequel le monomère (b) est présent en une quantité de 1 à 10%.

6. Mélange de ciment selon la revendication 5, dans lequel le monomère est choisi dans le groupe comprenant les sels d'un produit d'addition du méthacrylate de diméthylaminopropyle avec une épihalohydrine, un produit d'addition du méthacrylate de diméthylaminoéthyle avec une épihalohydrine, et un produit d'addition du diméthylaminopropylméthacrylamide avec une épihalohydrine.

7. Mélange de ciment selon la revendication 6, dans lequel l'épihalohydrine est l'épichlorohydrine.

8. Mélange de ciment selon la revendication 6, dans lequel le sel est le nitrate ou le chlorure.

9. Mélange de ciment selon la revendication 5, dans lequel le monomère est le nitrate ou le chlorure du produit d'addition du méthacrylate de diméthylaminopropyle et d'une épichlorohydrine, ou du méthacrylate de diméthylaminoéthyle et d'une épichlorohydrine, ou du diméthylaminopropylméthacrylamide et d'une épichlorohydrine.

10. Mélange de ciment selon la revendication 1, dans lequel le monomère (c) est choisi dans le groupe comprenant le styrène, l'acide acrylique, le méthacrylate de glycidyle, l'acrylate de diméthylaminoéthyle et le diméthylaminopropylméthacrylamide.

11. Mélange de ciment selon la revendication 1, dans lequel le monomère (d) est choisi dans le groupe comprenant l'acrylate de méthyle et l'acrylate d'éthyle.

12. Mélange de ciment selon la revendication 1, comprenant en outre du sable.

13. Mélange de ciment selon la revendication 12, dans lequel la quantité présente de polymère solide est environ 1 à 40% sur la base du ciment.

14. Mélange de ciment selon la revendication 9, dans lequel la quantité présente de polymère solide est environ 25 à 200% sur la base du ciment.

15. Composition additive pour améliorer le ciment, qui comprend une émulsion aqueuse d'un polymère d'acrylate ayant une Tg comprise entre –40°C et +10°C, le polymère comprenant (a) environ 25 à 85% d'un acrylate ou méthacrylate monomère, (b) environ 0,5 à 15% d'un sel monomère d'ammonium quaternaire cationique à prise alcaline, (c) 0 à 70% d'un monomère hydrolytiquement stable autre que (a) ou (b), et (d) 0 à 30% d'un monomère hydrolytiquement instable autre que (a) ou (b), les pourcentages étant en poids et leur total faisant 100%, dans lequel les groupes acrylate dans le polymère sont représentés par la formule

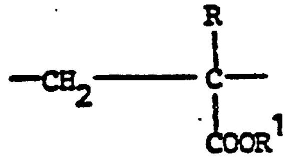

et le groupe d'ammonium quaternaire cationique à prise alcaline dans le polymère est représenté par la formule

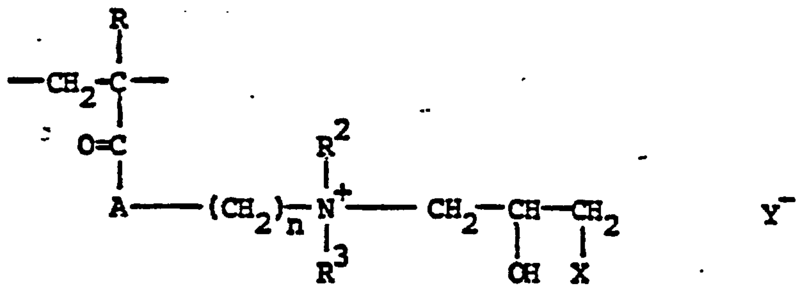

dans lesquelles R est de l'hydrogène ou un groupe méthyle, $R^1$ est un groupe alcoyle à 1 à 12 atomes de carbone ou un groupe cycloalcoyle à 6 à 12 atomes de carbone, sous la réserve que $R^1$ n'est pas un groupe méthyle ou éthyle lorsque R est de l'hydrogène, $R^2$ et $R^3$ sont des groupes méthyle ou éthyle, et $R^2$ et $R^3$ peuvent être identiques ou différents, A est –O– ou –NH–, X est du chlore, du brome ou de l'iode, $Y^-$ est un anion organique ou inorganique, et n est 2 ou 3, d'où il résulte une amélioration de la flexibilité et de l'adhérence du ciment sur un support.

16. Composition additive selon la revendication 15, dans laquelle le polymère d'acrylates a une Tg comprise entre 0 et –30°C, dans laquelle le monomère (a) est choisi dans le groupe comprenant le méthacrylate de méthyle, l'acrylate de 2-éthylhexyle et l'acrylate de butyle, dans laquelle le monomère (b) est présent en une quantité de 1 à 10% et est choisi dans le groupe comprenant le nitrate ou le chlorure d'un produit d'addition du méthacrylate de diméthylaminopropyle avec une épichlorohydrine, du produit d'addition du méthacrylate de diméthylaminoéthyle avec une épichlorhydrine, ou du produit d'addition du diméthylaminopropylméthacrylamide avec une épichlorohydrine, et dans laquelle le monomère (c) est choisi dans le groupe comprenant le styrène, l'acide acrylique, le méthacrylate de glycidyle, l'acrylate de diméthylaminoéthyle et le diméthylaminopropylméthacrylamide.

17. Procédé pour améliorer d'adhérence et la flexiblité d'un mélange de ciment, consistant à ajouter au ciment une émulsion aqueuse d'un polymère d'acrylates ayant une Tg comprise entre –40°C et +10°C, le polymère comprenant (a) envirion 25 à 99,5% d'un acrylate ou méthacrylate monomère, (b) environ 0,5 à 15% d'un sel monomère d'ammonium quaternaire cationique à prise alcaline, (c) 0 à 70% d'un monomère hydrolytiquement stable autre que (a) ou (b), et (d) 0 à 30% d'un monomère hydrolytiquement instable autre que (a) ou (b), les pourcentages étant en poids et totalisant 100%, dans lequel les groupes acrylate dans le polymère ont la formule

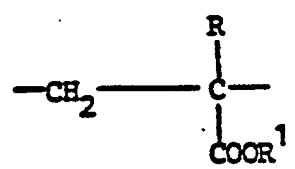

et les groupes ammonium quaternaire cationique à prise alcaline dans le polymère sont représentés par la formule

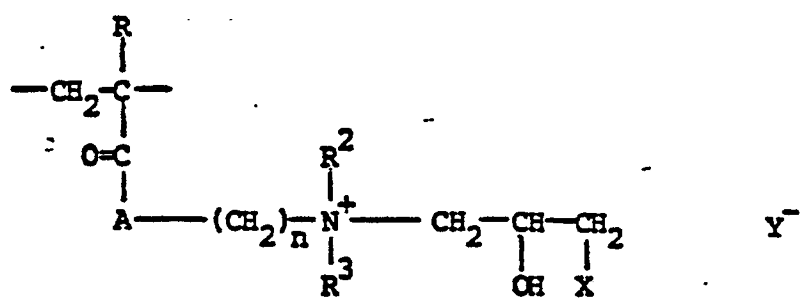

dans lesquelles R est de l'hydrogène ou un groupe méthyle, $R^1$ est un groupe alcoyle à 1 à 12 atomes de carbone ou un groupe cycloalcoyle à 6 à 12 atomes de carbone, sous la réserve que $R^1$ n'est pas un groupe méthyle ou éthyle lorsque R est de l'hydrogène, $R^2$ et $R^3$ sont des groupes méthyle ou éthyle et $R^2$ et $R^3$ peuvent être identiques ou différents, A est –O– ou –NH–, X est du chlore, du brome ou de l'iode, $Y^-$ est un anion organique et n est égal à 2 ou 3, l'émulsion aqueuse étant ajoutée en une quantité suffisante pour procurer environ 1 à 200% en poids de polymère solide sur la base du ciment solide.

18. Procédé selon la revendication 17, dans lequel le polymère d'acrylates a une Tg comprise entre 0 et –30°C, dans lequel le monomère (a) est choisi dans le groupe comprenant le méthacrylate de méthyle, l'acrylate de 2-éthylhexyle et l'acrylate de butyle; dans lequel le monomère (b) est présent en une quantité de 1 à 10% et est choisi dans le groupe comprenant le nitrate ou le chlorure d'un produit d'addition du méthacrylate de diméthylaminopropyle avec une épichlorohydrine, du produit d'addition du méthacrylate de diméthylaminoéthyle avec une épichlorohydrine, ou du produit d'addition du diméthylaminopropylméthacrylamide avec une épichlorohydrine, et dans lequel le monomère (c) est choisi dans le groupe comprenant le styrène, l'acide acrylique, le méthacrylate de glycidyle, l'acrylate de diméthylaminoéthyle et le diméthylaminopropylméthacrylamide, l'émulsion aqueuse étant ajoutée en une quantité d'environ 5 à 25% lorsque le mélange de ciment doit être utilisé en tant que mortier ou d'environ 40 à 100% lorsque le mélange de ciment doit être utilisé comme peinture.